# EUROPEAN PATENT APPLICATION

(11) **EP 4 678 913 A1**
(43) Date of publication of application: **14.01.2026**
(21) Application number: 24766835.3
(22) Date of filing: 16.02.2024
(51) Int. Cl.: F04B 31/00, F04B 49/06

(54) **GAS COMPRESSOR AND OPERATION METHOD FOR GAS COMPRESSOR**

(30) Priority: 08.03.2023 JP 2023035512
(71) Applicant: KAWASAKI JUKOGYO KABUSHIKI KAISHA, Kobe-shi, Hyogo 650-8670 (JP)
(72) Inventor: MIBU, Koki, Hyogo, 650-8670 (JP); HATTORI, Tomohide, Hyogo, 650-8670 (JP)
(74) Representative: Dehns
(86) International application number: PCT/JP2024/005495
(87) International publication number: WO 2024/185464

(57) **Abstract**

A gas compressor (1A) according to one embodiment includes a first gas booster (2A) and a second gas booster (2B). The first gas booster (2A) includes a first gas piston (33) and a first hydraulic piston (44), the first gas piston (33) facing a first compression chamber (3a), the first hydraulic piston (44) partitioning off a first driving chamber (4a) and a second driving chamber (4b) from each other and being coupled to the first gas piston (33). The second gas booster (2B) includes a second gas piston (37) and a second hydraulic piston (48), the second gas piston (37) facing a second compression chamber (3b) that is supplied with gas from the first compression chamber (3a), the second hydraulic piston (48) partitioning off a third driving chamber (4c) and a fourth driving chamber (4d) from each other and being coupled to the second gas piston (37). The gas compressor (1A) further includes an on-off valve (82) located on a communication passage (81) through which the first driving chamber (4a) and the third driving chamber (4c), or the second driving chamber (4b) and the fourth driving chamber (4d), communicate with each other.

## Description

### Technical Field

The present disclosure relates to a hydraulically driven gas compressor and a method of operating the gas compressor.

### Background Art

Conventionally, hydraulically driven gas compressors have been known. For example, this type of gas compressor is used as a large-sized gas compressor.

For example, Patent Literature 1 discloses a gas compressor 100 as shown in FIG. 7, which compresses gas in two stages. Specifically, the gas compressor 100 includes a first structure 200 and a second structure 300. Each of the first structure 200 and the second structure 300 is sometimes called a gas booster.

The first structure 200 includes: a first gas piston 220, which faces a first compression chamber 210; and a first hydraulic piston 250, which partitions off a first driving chamber 230 and a second driving chamber 240 from each other. The first hydraulic piston 250 is coupled to the first gas piston 220 by a rod 260, which extends across the first driving chamber 230.

Similarly, the second structure 300 includes: a second gas piston 320, which faces a second compression chamber 310; and a second hydraulic piston 350, which partitions off a third driving chamber 330 and a fourth driving chamber 340 from each other. The second hydraulic piston 350 is coupled to the second gas piston 320 by a rod 360, which extends across the third driving chamber 330.

The first compression chamber 210 and the second compression chamber 310 communicate with each other through a gas communication passage 400. Accordingly, gas is supplied from the first compression chamber 210 to the second compression chamber 310. Also, the first driving chamber 230 and the third driving chamber 330 communicate with each other through a hydraulic communication passage 500.

### Citation List

### Patent Literature

PTL 1: Japanese National Phase PCT Laid-Open Application Publication No. 2021-522446

### Summary of Invention

### Technical Problem

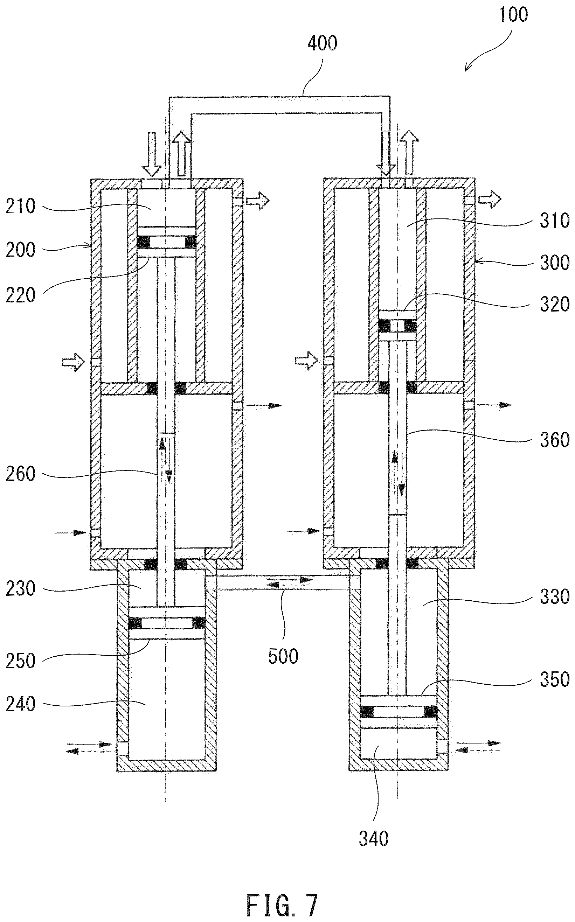

However, in the gas compressor 100 shown in FIG. 7, the gas can be compressed only by two-stage compression.

In view of the above, an object of the present disclosure is to provide a gas compressor capable of switching between compressing gas in one stage and compressing the gas in two stages, and to provide a method of operating the gas compressor.

### Solution to Problem

One aspect of the present disclosure provides a gas compressor including: a first gas booster including a first gas piston and a first hydraulic piston, the first gas piston facing a first compression chamber, the first hydraulic piston partitioning off a first driving chamber and a second driving chamber from each other and being coupled to the first gas piston by a rod that extends across the first driving chamber; a second gas booster including a second gas piston and a second hydraulic piston, the second gas piston facing a second compression chamber that is supplied with gas from the first compression chamber, the second hydraulic piston partitioning off a third driving chamber and a fourth driving chamber from each other and being coupled to the second gas piston by a rod that extends across the third driving chamber; and an on-off valve located on a communication passage through which the first driving chamber and the third driving chamber, or the second driving chamber and the fourth driving chamber, communicate with each other.

Another aspect of the present disclosure provides a method of operating a gas compressor including a first gas booster and a second gas booster, the method including switching between a two-stage compression operation mode of compressing gas in two stages by using both the first gas booster and the second gas booster and a one-stage compression operation mode of compressing the gas in one stage by using the second gas booster without using the first gas booster.

### Advantageous Effects of Invention

The present disclosure provides a gas compressor capable of switching between compressing gas in one stage and compressing the gas in two stages, and also provides a method of operating the gas compressor.

### Brief Description of Drawings

FIG. 1 shows a schematic configuration of a gas compressor according to Embodiment 1.
FIG. 2 shows a state before the gas compressor is stopped.
FIG. 3 shows a state where hydraulic oil is charged into a middle chamber of the gas compressor.
FIG. 4 shows a schematic configuration of a gas compressor according to a variation of Embodiment 1.
FIG. 5 shows a schematic configuration of a gas compressor according to Embodiment 2.
FIG. 6 shows a schematic configuration of a gas compressor according to a variation of Embodiment 2.
FIG. 7 shows a schematic configuration of a conventional gas compressor.

### Description of Embodiments

### <Embodiment 1>

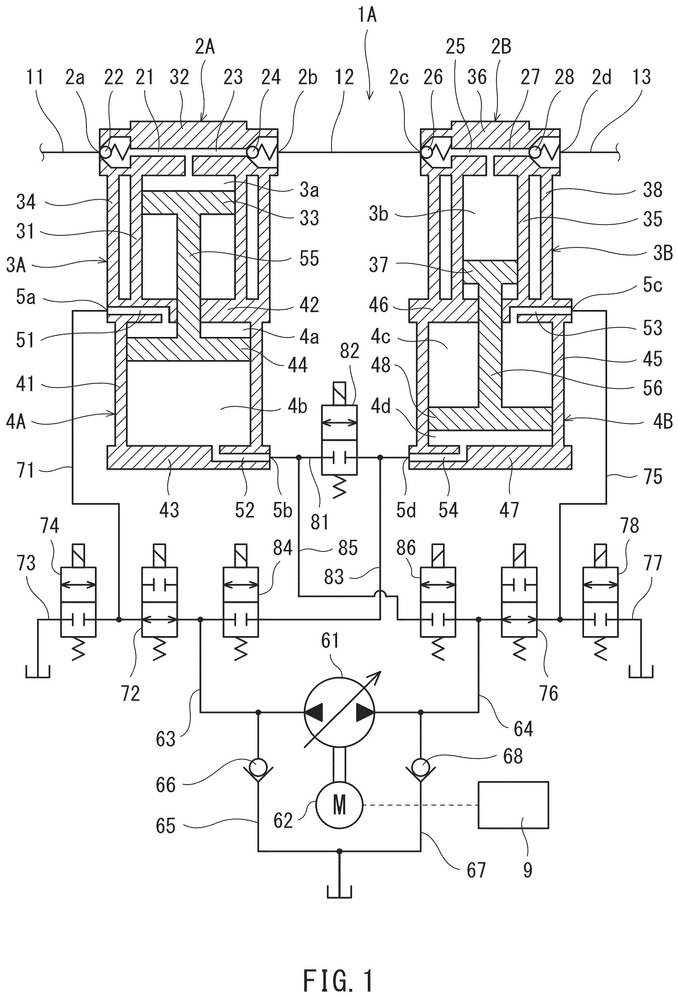

FIG. 1 shows a gas compressor 1A according to Embodiment 1. The gas compressor 1A includes a first gas booster 2A and a second gas booster 2B, and compresses gas in two stages or in one stage. The gas to be compressed is not particularly limited to a specific type of gas, but is, for example, hydrogen.

The gas compressor 1A further includes: a hydraulic pump 61, which supplies hydraulic oil to either the first gas booster 2A or the second gas booster 2B; an electric motor 62, which drives the hydraulic pump 61; and control circuitry 9, which controls the hydraulic pump 61 via the electric motor 62.

The first gas booster 2A includes a gas cylinder 3A, a hydraulic cylinder 4A, and a rod 55. The second gas booster 2B includes a gas cylinder 3B, a hydraulic cylinder 4B, and a rod 56. A major difference between the first gas booster 2A and the second gas booster 2B is a size difference between the gas cylinder 3A and the gas cylinder 3B. Specifically, the diameter of a below-described second gas piston 37 is less than the diameter of a below-described first gas piston 33. For example, the area of the first gas piston 33 is two to ten times as great as the area of the second gas piston 37. Alternatively, the internal volume of a below-described gas cylinder tube 31 and the internal volume of a below-described gas cylinder tube 35 may be made different from each other not by the diameters of the first gas piston 33 and the second gas piston 37, but by other elements.

The gas cylinder 3A and the hydraulic cylinder 4A of the first gas booster 2A are located coaxially, and the gas cylinder 3B and the hydraulic cylinder 4B of the second gas booster 2B are located coaxially. In the present embodiment, the axial direction of each of the gas cylinder 3A, the gas cylinder 3B, the hydraulic cylinder 4A, and the hydraulic cylinder 4B is an upward-downward direction. The axial direction of each of the gas cylinder 3A, the gas cylinder 3B, the hydraulic cylinder 4A, and the hydraulic cylinder 4B may be parallel to the vertical direction, or may be slightly inclined relative to the vertical direction, for example, by 20 degrees or less. In the present embodiment, the hydraulic cylinder 4A is located under the gas cylinder 3A, and the hydraulic cylinder 4B is located under the gas cylinder 3B. That is, a below-described first driving chamber 4a and a below-described second driving chamber 4b of the first gas booster 2A are positioned under a below-described first compression chamber 3a, and a below-described third driving chamber 4c and a below-described fourth driving chamber 4d of the second gas booster 2B are positioned under a below-described second compression chamber 3b.

Regarding the first gas booster 2A, the gas cylinder 3A includes the gas cylinder tube 31, a gas cover 32, and the first gas piston 33. The gas cylinder tube 31 has a tubular shape extending in the upward-downward direction. The gas cover 32 seals an upper opening of the gas cylinder tube 31 at the opposite side to the hydraulic cylinder 4A. The first gas piston 33 is located inside the gas cylinder tube 31, and forms the first compression chamber 3a between the first gas piston 33 and the gas cover 32. That is, the first gas piston 33 faces the first compression chamber 3a.

The gas cylinder 3A further includes a tubular jacket 34, which accommodates the gas cylinder tube 31 and which extends from the gas cover 32 to a below-described hydraulic cover 42. There is an annular cooling chamber between the gas cylinder tube 31 and the jacket 34. A coolant is fed to and discharged from the cooling chamber. However, the jacket 34 may be eliminated.

The gas cover 32 is, for example, disc-shaped. In the present embodiment, an end surface of the gas cover 32, the end surface facing radially outward, includes a suction port 2a and a delivery port 2b. Alternatively, the top surface of the gas cover 32 may include one of or both the suction port 2a and the delivery port 2b.

The gas cover 32 includes: a gas passage 21 extending from the suction port 2a to the first compression chamber 3a; and a gas passage 23 extending from the first compression chamber 3a to the delivery port 2b. Check valves 22 and 24 are located on the gas passages 21 and 23, respectively.

Alternatively, the check valve 22 may be located on a below-described gas supply passage 11, and the check valve 24 may be located on a below-described gas communication passage 12. In this case, the suction port 2a and the delivery port 2b may be included in an upper part of the gas cylinder tube 31, and the gas passages 21 and 23 may be eliminated. In a case where the suction port 2a and the delivery port 2b are included in the gas cylinder tube 31, a pipe that serves as the gas supply passage 11 may penetrate the jacket 34 to connect to the suction port 2a, and a pipe that serves as the gas communication passage 12 may penetrate the jacket 34 to connect to the delivery port 2b.

The hydraulic cylinder 4A includes a hydraulic cylinder tube 41, a pair of hydraulic covers 42 and 43, and a first hydraulic piston 44. The hydraulic cylinder tube 41 has a tubular shape extending in the upward-downward direction. The hydraulic cover 42 seals an upper opening of the hydraulic cylinder tube 41, whereas the hydraulic cover 43 seals a lower opening of the hydraulic cylinder tube 41.

The first hydraulic piston 44 is located inside the hydraulic cylinder tube 41. The first hydraulic piston 44 forms the first driving chamber 4a between the first hydraulic piston 44 and the hydraulic cover 42, and also forms the second driving chamber 4b between the first hydraulic piston 44 and the hydraulic cover 43. That is, the first hydraulic piston 44 partitions off the first driving chamber 4a and the second driving chamber 4b from each other. In the present embodiment, the first hydraulic piston 44 is configured as a single-component piston. Alternatively, the first hydraulic piston 44 may include multiple components. For example, the first hydraulic piston 44 may include two plates and a rod located therebetween. In this case, the hydraulic oil may be supplied between the two plates.

In the present embodiment, a lower opening of the gas cylinder tube 31 is sealed by the hydraulic cover 42. The rod 55 extends across the first driving chamber 4a, and penetrates the hydraulic cover 42 to couple the first gas piston 33 and the first hydraulic piston 44 to each other. Alternatively, similar to the gas compressor 100 shown in FIG. 7, the lower opening of the gas cylinder tube 31 may be sealed by a middle cover, and a middle tube surrounding the space around the rod 55 may be located between the middle cover and the hydraulic cover 42.

Each of the hydraulic covers 42 and 43 is, for example, disc-shaped. In the present embodiment, an end surface of the hydraulic cover 42, the end surface facing radially outward, includes a supply/discharge port 5a, and an end surface of the hydraulic cover 43, the end surface facing radially outward, includes a supply/discharge port 5b. However, the positions of the supply/discharge ports 5a and 5b are not limited to this. For example, the supply/discharge port 5a may be included in an upper part of the hydraulic cylinder tube 41, and a below-described hydraulic passage 51 may be eliminated. Similarly, the supply/discharge port 5b may be included in a lower part of the hydraulic cylinder tube 41, and a below-described hydraulic passage 52 may be eliminated.

The hydraulic cover 42 includes the hydraulic passage 51, through which the supply/discharge port 5a and the first driving chamber 4a communicate with each other. The hydraulic cover 43 includes the hydraulic passage 52, through which the supply/discharge port 5b and the second driving chamber 4b communicate with each other.

Regarding the second gas booster 2B, the gas cylinder 3B includes the gas cylinder tube 35, a gas cover 36, and the second gas piston 37. The gas cylinder tube 35 has a tubular shape extending in the upward-downward direction. The gas cover 36 seals an upper opening of the gas cylinder tube 35 at the opposite side to the hydraulic cylinder 4B. The second gas piston 37 is located inside the gas cylinder tube 35, and forms the second compression chamber 3b between the second gas piston 37 and the gas cover 36. That is, the second gas piston 37 faces the second compression chamber 3b.

The gas cylinder 3B further includes a tubular jacket 38, which accommodates the gas cylinder tube 35 and which extends from the gas cover 36 to a below-described hydraulic cover 46. There is an annular cooling chamber between the gas cylinder tube 35 and the jacket 38. A coolant is fed to and discharged from the cooling chamber. However, the jacket 38 may be eliminated.

The gas cover 36 is, for example, disc-shaped. In the present embodiment, an end surface of the gas cover 36, the end surface facing radially outward, includes a suction port 2c and a delivery port 2d. Alternatively, the top surface of the gas cover 36 may include one of or both the suction port 2c and the delivery port 2d.

The gas cover 36 includes: a gas passage 25 extending from the suction port 2c to the second compression chamber 3b; and a gas passage 27 extending from the second compression chamber 3b to the delivery port 2d. Check valves 26 and 28 are located on the gas passages 25 and 27, respectively.

Alternatively, the check valve 26 may be located on the below-described gas communication passage 12, and the check valve 28 may be located on a below-described gas discharge passage 13. In this case, the suction port 2c and the delivery port 2d may be included in an upper part of the gas cylinder tube 35, and the gas passages 25 and 27 may be eliminated. In a case where the suction port 2c and the delivery port 2d are included in the gas cylinder tube 35, a pipe that serves as the gas communication passage 12 may penetrate the jacket 38 to connect to the suction port 2c, and a pipe that serves as the gas discharge passage 13 may penetrate the jacket 38 to connect to the delivery port 2d.

The hydraulic cylinder 4B includes a hydraulic cylinder tube 45, a pair of hydraulic covers 46 and 47, and a second hydraulic piston 48. The hydraulic cylinder tube 45 has a tubular shape extending in the upward-downward direction. The hydraulic cover 46 seals an upper opening of the hydraulic cylinder tube 45, whereas the hydraulic cover 47 seals a lower opening of the hydraulic cylinder tube 45.

The second hydraulic piston 48 is located inside the hydraulic cylinder tube 45. The second hydraulic piston 48 forms the third driving chamber 4c between the second hydraulic piston 48 and the hydraulic cover 46, and also forms the fourth driving chamber 4d between the second hydraulic piston 48 and the hydraulic cover 47. That is, the second hydraulic piston 48 partitions off the third driving chamber 4c and the fourth driving chamber 4d from each other. In the present embodiment, the second hydraulic piston 48 is configured as a single-component piston. Alternatively, the second hydraulic piston 48 may include multiple components. For example, the second hydraulic piston 48 may include two plates and a rod located therebetween. In this case, the hydraulic oil may be supplied between the two plates.

In the present embodiment, a lower opening of the gas cylinder tube 35 is sealed by the hydraulic cover 46. The rod 56 extends across the third driving chamber 4c, and penetrates the hydraulic cover 46 to couple the second gas piston 37 and the second hydraulic piston 48 to each other. Alternatively, similar to the gas compressor 100 shown in FIG. 7, the lower opening of the gas cylinder tube 35 may be sealed by a middle cover, and a middle tube surrounding the space around the rod 56 may be located between the middle cover and the hydraulic cover 46.

Each of the hydraulic covers 46 and 47 is, for example, disc-shaped. In the present embodiment, an end surface of the hydraulic cover 46, the end surface facing radially outward, includes a supply/discharge port 5c, and an end surface of the hydraulic cover 47, the end surface facing radially outward, includes a supply/discharge port 5d. However, the positions of the supply/discharge ports 5c and 5d are not limited to this. For example, the supply/discharge port 5c may be included in an upper part of the hydraulic cylinder tube 45, and a below-described hydraulic passage 53 may be eliminated. Similarly, the supply/discharge port 5d may be included in a lower part of the hydraulic cylinder tube 45, and a below-described hydraulic passage 54 may be eliminated.

The hydraulic cover 46 includes the hydraulic passage 53, through which the supply/discharge port 5c and the third driving chamber 4c communicate with each other. The hydraulic cover 47 includes the hydraulic passage 54, through which the supply/discharge port 5d and the fourth driving chamber 4d communicate with each other.

The gas supply passage 11 is connected to the suction port 2a of the first gas booster 2A, and the gas discharge passage 13 is connected to the delivery port 2d of the second gas booster 2B. The delivery port 2b of the first gas booster 2A and the suction port 2c of the second gas booster 2B are connected to each other by the gas communication passage 12. Accordingly, the gas is supplied from the first compression chamber 3a to the second compression chamber 3b. The gas communication passage 12 may be equipped with a cooler.

The supply/discharge port 5b of the first gas booster 2A and the supply/discharge port 5d of the second gas booster 2B are connected to each other by a hydraulic communication passage 81. In other words, through the hydraulic communication passage 81, the second driving chamber 4b of the first gas booster 2A and the fourth driving chamber 4d of the second gas booster 2B communicate with each other. Accordingly, the second driving chamber 4b, the hydraulic passage 52, the hydraulic communication passage 81, the hydraulic passage 54, and the fourth driving chamber 4d form a middle chamber. A first on-off valve 82 is located on the hydraulic communication passage 81. In the aforementioned case where the supply/discharge port 5b is included in the hydraulic cylinder tube 41 and the hydraulic passage 52 is eliminated and where the supply/discharge port 5d is included in the hydraulic cylinder tube 45 and the hydraulic passage 54 is eliminated, the second driving chamber 4b, the hydraulic communication passage 81, and the fourth driving chamber 4d form the middle chamber.

The diameter of the first hydraulic piston 44 of the first gas booster 2A and the diameter of the second hydraulic piston 48 of the second gas booster 2B are equal to each other. Accordingly, the stroke of the first hydraulic piston 44 and the first gas piston 33 and the stroke of the second hydraulic piston 48 and the second gas piston 37 are equal to each other. Alternatively, the diameter of the first hydraulic piston 44 and the diameter of the second hydraulic piston 48 may be different from each other, and the stroke of the first hydraulic piston 44 and the first gas piston 33 and the stroke of the second hydraulic piston 48 and the second gas piston 37 may be different from each other.

The above-described hydraulic pump 61 delivers the hydraulic oil to either a first shared passage 63 or a second shared passage 64. In the present embodiment, the hydraulic pump 61 is a bi-directional pump capable of switching, by its rotation direction, the delivery direction of the hydraulic oil, and the first shared passage 63 and the second shared passage 64 are directly connected to the hydraulic pump 61. For example, the bi-directional pump is an axial piston pump. Alternatively, the hydraulic pump 61 may be an axial piston pump that rotates in a single direction and whose hydraulic oil delivery direction is switched in accordance with a direction in which a swash plate or a bent axis is tilted from the center. In this case, the control circuitry 9 controls the hydraulic pump 61 via a regulator that changes the tilt angle of the hydraulic pump 61. In the illustrated example, the hydraulic pump 61 is a variable displacement pump. Alternatively, the hydraulic pump 61 may be a fixed displacement pump.

The first shared passage 63 is connected to a tank by a tank passage 65, and a check valve 66 is located on the tank passage 65. Similarly, the second shared passage 64 is connected to the tank by a tank passage 67, and a check valve 68 is located on the tank passage 67.

The first shared passage 63 is connected to the supply/discharge port 5b of the first gas booster 2A by a first supply/discharge passage 71, and the second shared passage 64 is connected to the supply/discharge port 5c of the second gas booster 2B by a second supply/discharge passage 75. That is, the first supply/discharge passage 71 is located between the first shared passage 63 and the second driving chamber 4b, and the second supply/discharge passage 75 is located between the second shared passage 64 and the third driving chamber 4c. A second on-off valve 72 is located on the first supply/discharge passage 71, and a third on-off valve 76 is located on the second supply/discharge passage 75.

A first branch passage 83 is branched off from the hydraulic communication passage 81 at a position closer to the fourth driving chamber 4d than the first on-off valve 82 is. The first branch passage 83 connects to the first shared passage 63. A fourth on-off valve 84 is located on the first branch passage 83. A second branch passage 85 is branched off from the hydraulic communication passage 81 at a position closer to the second driving chamber 4b than the first on-off valve 82 is. The second branch passage 85 connects to the second shared passage 64. A fifth on-off valve 86 is located on the second branch passage 85.

A portion of the first supply/discharge passage 71 between the second on-off valve 72 and the first gas booster 2A is connected to the tank by a tank passage 73, and a sixth on-off valve 74 is located on the tank passage 73. Similarly, a portion of the second supply/discharge passage 75 between the third on-off valve 76 and the second gas booster 2B is connected to the tank by a tank passage 77, and a seventh on-off valve 78 is located on the tank passage 77.

The control circuitry 9 not only controls the hydraulic pump 61 via the electric motor 62 as described above, but also controls the first on-off valve 82, the second on-off valve 72, the third on-off valve 76, the fourth on-off valve 84, the fifth on-off valve 86, the sixth on-off valve 74, and the seventh on-off valve 78. In the illustrated example, each of the first on-off valve 82, the fourth on-off valve 84, the fifth on-off valve 86, the sixth on-off valve 74, and the seventh on-off valve 78 is a normally closed valve, whereas each of the second on-off valve 72 and the third on-off valve 76 is a normally open valve. However, regarding each of the first on-off valve 82, the second on-off valve 72, the third on-off valve 76, the fourth on-off valve 84, the fifth on-off valve 86, the sixth on-off valve 74, and the seventh on-off valve 78, whether to configure it as a normal closed valve or to configure it as a normally open valve can be determined as necessary.

Regarding the control circuitry 9, the functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor. The control circuitry 9 may be configured as a single device, or may be configured as a plurality of devices.

Next, a method of operating the gas compressor 1A is described. This operating method includes switching between a two-stage compression operation mode of compressing the gas in two stages by using both the first gas booster 2A and the second gas booster 2B and a one-stage compression operation mode of compressing the gas in one stage by using the second gas booster 2B without using the first gas booster 2A. For example, when the pressure of the gas supplied through the gas supply passage 11 is low, the gas is compressed in two stages, whereas when the pressure of the gas supplied through the gas supply passage 11 is high, the gas is compressed in one stage.

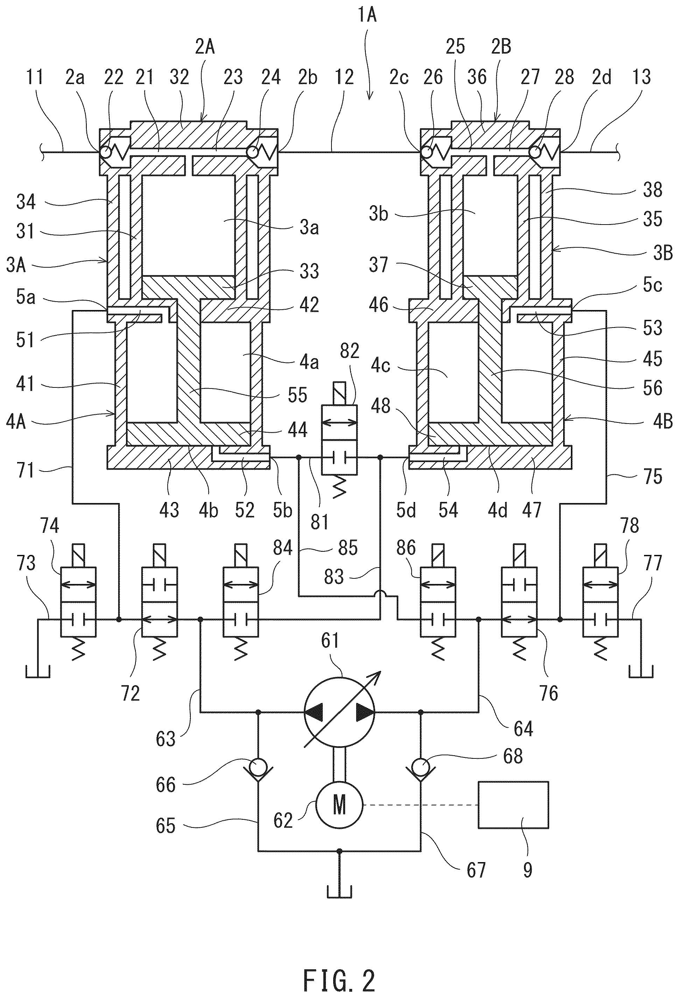

When the gas compressor 1A is in an operation-stopped state, as shown in FIG. 2, the first hydraulic piston 44 of the first gas booster 2A is, due to its own weight, in contact with the hydraulic cover 43, and the second hydraulic piston 48 of the second gas booster 2B is, due to its own weight, in contact with the hydraulic cover 47. For instance, the sixth on-off valve 74 and the seventh on-off valve 78 are opened, for example, at a timing before an operation stop of the gas compressor 1A, and except that timing, the sixth on-off valve 74 and the seventh on-off valve 78 are kept closed.

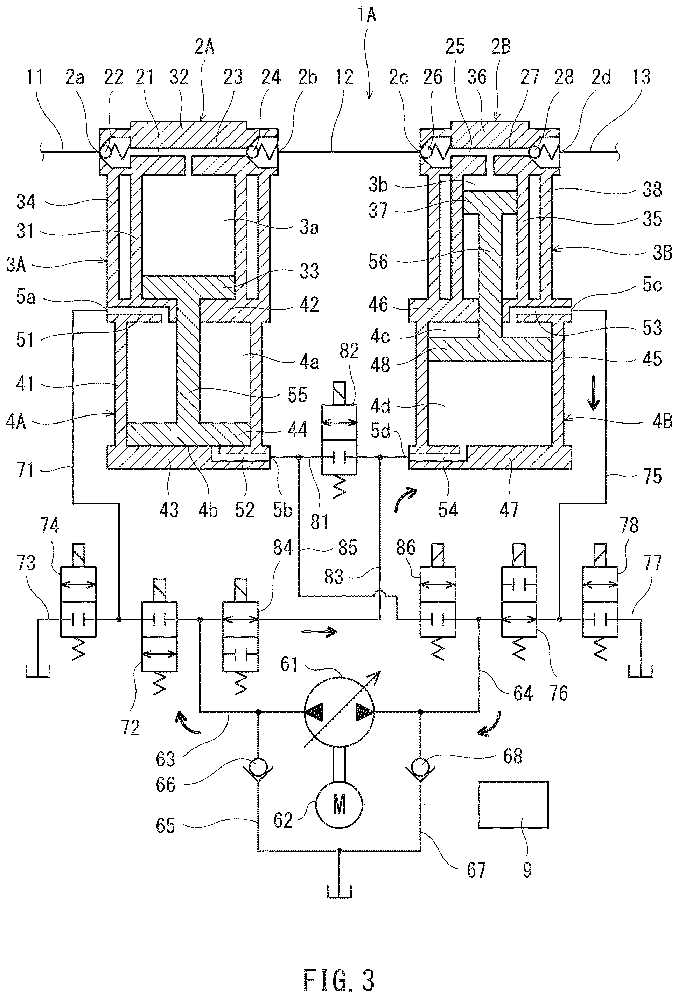

Before compressing the gas by using both the first gas booster 2A and the second gas booster 2B, the control circuitry 9 drives the hydraulic pump 61 to rotate in a direction to deliver the hydraulic oil to the first shared passage 63 in a state where the third on-off valve 76 and the fourth on-off valve 84 are opened and the first on-off valve 82, the second on-off valve 72, and the fifth on-off valve 86 are closed as shown in FIG. 3. Consequently, the hydraulic oil is supplied to the fourth driving chamber 4d, and the second hydraulic piston 48 moves upward. In other words, the second hydraulic piston 48 moves in a direction toward the second gas piston 37. Therefore, the hydraulic oil can be charged into the middle chamber that is formed by the second driving chamber 4b, the hydraulic passage 52, the hydraulic communication passage 81, the hydraulic passage 54, and the fourth driving chamber 4d.

After the second hydraulic piston 48 has moved upward and reached the upper limit, in a state where the second on-off valve 72 and the fifth on-off valve 86 are opened and the first on-off valve 82, the third on-off valve 76, and the fourth on-off valve 84 are closed, the control circuitry 9 drives the hydraulic pump 61 to rotate in a direction to deliver the hydraulic oil to the second shared passage 64 to supply the hydraulic oil to the second driving chamber 4b to slightly move the second hydraulic piston 48 upward. In this manner, the hydraulic oil whose volume is greater than the volume of the second driving chamber 4b or the fourth driving chamber 4d can be charged into the middle chamber. As a result, when the first gas piston 33 or the second gas piston 37 moves downward, it can be prevented from coming into contact with the hydraulic cover 42 or 46.

Alternatively, in order to charge the hydraulic oil into the middle chamber, conversely to the above manner, first, in a state where the second on-off valve 72 and the fifth on-off valve 86 are opened and the first on-off valve 82, the third on-off valve 76, and the fourth on-off valve 84 are closed, the hydraulic pump 61 may be driven to rotate in the direction to deliver the hydraulic oil to the second shared passage 64 to move the first hydraulic piston 44 upward to the upper limit, i.e., to move the first hydraulic piston 44 in a direction toward the first gas piston 33, and thereafter, in a state where the third on-off valve 76 and the fourth on-off valve 84 are opened and the first on-off valve 82, the second on-off valve 72, and the fifth on-off valve 86 are closed, the hydraulic pump 61 may be driven to rotate in the direction to deliver the hydraulic oil to the first shared passage 63 to slightly move the second hydraulic piston 48 upward.

After the hydraulic oil is charged into the middle chamber, in the case of compressing the gas by using both the first gas booster 2A and the second gas booster 2B, the control circuitry 9 opens the first on-off valve 82, the second on-off valve 72, and the third on-off valve 76, and closes the fourth on-off valve 84 and the fifth on-off valve 86. In this state, the control circuitry 9 causes the hydraulic pump 61 to rotate alternately in the direction to deliver the hydraulic oil to the first shared passage 63 and in the direction to deliver the hydraulic oil to the second shared passage 64.

Since the hydraulic oil is charged into the middle chamber, the first hydraulic piston 44 and the second hydraulic piston 48 move alternately. First, when the hydraulic oil is supplied from the hydraulic pump 61 to the first driving chamber 4a through the first shared passage 63 and the first supply/discharge passage 71, the first hydraulic piston 44 and the first gas piston 33 move downward, and the second hydraulic piston 48 and the second gas piston 37 move upward. As a result of the first gas piston 33 moving downward, the gas is supplied from the gas supply passage 11 to the first compression chamber 3a through the gas passage 21.

Next, when the hydraulic oil is supplied from the hydraulic pump 61 to the third driving chamber 4c through the second shared passage 64 and the second supply/discharge passage 75, the second hydraulic piston 48 and the second gas piston 37 move downward, and the first hydraulic piston 44 and the first gas piston 33 move upward. As a result of the first gas piston 33 moving upward and the second gas piston 37 moving downward, the gas is supplied from the first compression chamber 3a to the second compression chamber 3b through the gas passage 23, the gas communication passage 12, and the gas passage 25. At the time, the gas is compressed due to an area difference between the first compression chamber 3a and the second compression chamber 3b.

Again, when the hydraulic oil is supplied from the hydraulic pump 61 to the first driving chamber 4a through the first shared passage 63 and the first supply/discharge passage 71, the first hydraulic piston 44 and the first gas piston 33 move downward, and the second hydraulic piston 48 and the second gas piston 37 move upward. As a result of the second gas piston 37 moving upward, the gas is compressed in the second compression chamber 3b to at least the pressure downstream of the check valve 28, and the compressed gas is discharged through the gas passage 27 and the gas discharge passage 13.

On the other hand, in the case of compressing the gas by using the second gas booster 2B without using the first gas booster 2A, the control circuitry 9 opens the third on-off valve 76 and the fourth on-off valve 84, and closes the first on-off valve 82, the second on-off valve 72, and the fifth on-off valve 86. In this state, the control circuitry 9 causes the hydraulic pump 61 to rotate alternately in the direction to deliver the hydraulic oil to the first shared passage 63 and in the direction to deliver the hydraulic oil to the second shared passage 64. At the time, the gas supplied through the gas supply passage 11 passes through the gas passages 21 and 23 of the first gas booster 2A, is supplied to the second compression chamber 3b through the gas communication passage 12 and the gas passage 25 of the second gas booster 2B, and is compressed in the second compression chamber 3b.

As described above, in the gas compressor 1A of the present embodiment, since the first on-off valve 82 is located on the hydraulic communication passage 81, if the first on-off valve 82 is closed, one of the first hydraulic piston 44 or the second hydraulic piston 48 can be stopped, and the other can be moved. This makes it possible to switch between compressing the gas in one stage and compressing the gas in two stages.

To be more specific, as described above, two-stage gas compression using both the first gas booster 2A and the second gas booster 2B is enabled by opening the first on-off valve 82, the second on-off valve 72, and the third on-off valve 76 and closing the fourth on-off valve 84 and the fifth on-off valve 86. Also, one-stage gas compression using the second gas booster 2B without using the first gas booster 2A is enabled by opening the third on-off valve 76 and the fourth on-off valve 84 and closing the first on-off valve 82, the second on-off valve 72, and the fifth on-off valve 86.

### <Variations>

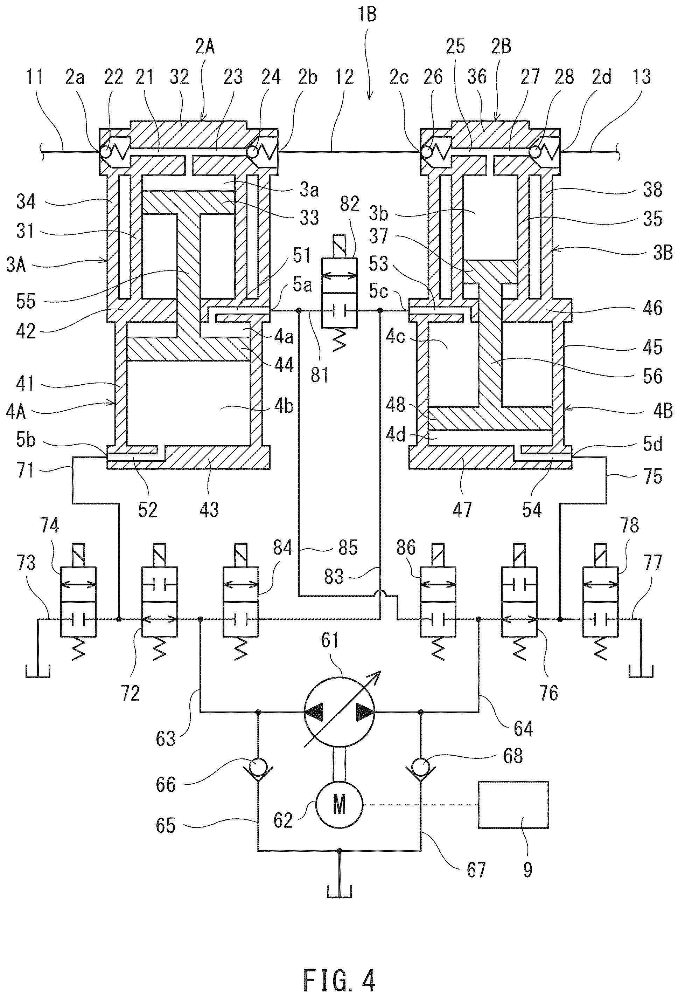

As in a gas compressor 1B, which is a variation shown in FIG. 4, the supply/discharge port 5a of the first gas booster 2A and the supply/discharge port 5c of the second gas booster 2B may be connected to each other by the hydraulic communication passage 81, and through the hydraulic communication passage 81, the first driving chamber 4a of the first gas booster 2A and the third driving chamber 4c of the second gas booster 2B may communicate with each other. In this case, the first supply/discharge passage 71 is connected to the supply/discharge port 5b of the first gas booster 2A, and the second supply/discharge passage 75 is connected to the supply/discharge port 5d of the second gas booster 2B.

In the gas compressor 1B shown in FIG. 4, the first supply/discharge passage 71 is located between the second driving chamber 4b and the first shared passage 63, and the second supply/discharge passage 75 is located between the fourth driving chamber 4d and the second shared passage 64. The first branch passage 83 is branched off from the hydraulic communication passage 81 at a position closer to the third driving chamber 4c than the first on-off valve 82 is, and the second branch passage 85 is branched off from the hydraulic communication passage 81 at a position closer to the first driving chamber 4a than the first on-off valve 82 is.

Also in the gas compressor 1B shown in FIG. 4, similar to Embodiment 1, in the case of compressing the gas in two stages by using both the first gas booster 2A and the second gas booster 2B, the control circuitry 9 opens the first on-off valve 82, the second on-off valve 72, and the third on-off valve 76, and closes the fourth on-off valve 84 and the fifth on-off valve 86. On the other hand, in the case of compressing the gas in one stage by using the second gas booster 2B without using the first gas booster 2A, the control circuitry 9 opens the third on-off valve 76 and the fourth on-off valve 84 and closes the first on-off valve 82, the second on-off valve 72, and the fifth on-off valve 86. In FIG. 4, an operation of charging the hydraulic oil into the middle chamber, such as the one described in Embodiment 1, is unnecessary.

Further, in FIG. 1 or FIG. 4, a bypass passage that is branched off from the gas supply passage 11 in a manner to bypass the first gas booster 2A and that connects to the gas communication passage 12 may be adopted, and a bypass valve may be located on the bypass passage. In this case, when compressing the gas in one stage by using the second gas booster 2B without using the first gas booster 2A, by opening the bypass valve, the gas may be supplied to the second compression chamber 3b without passing through the first gas booster 2A. That is, it is unnecessary to always supply the gas from the first compression chamber 3a to the second compression chamber 3b.

### <Embodiment 2>

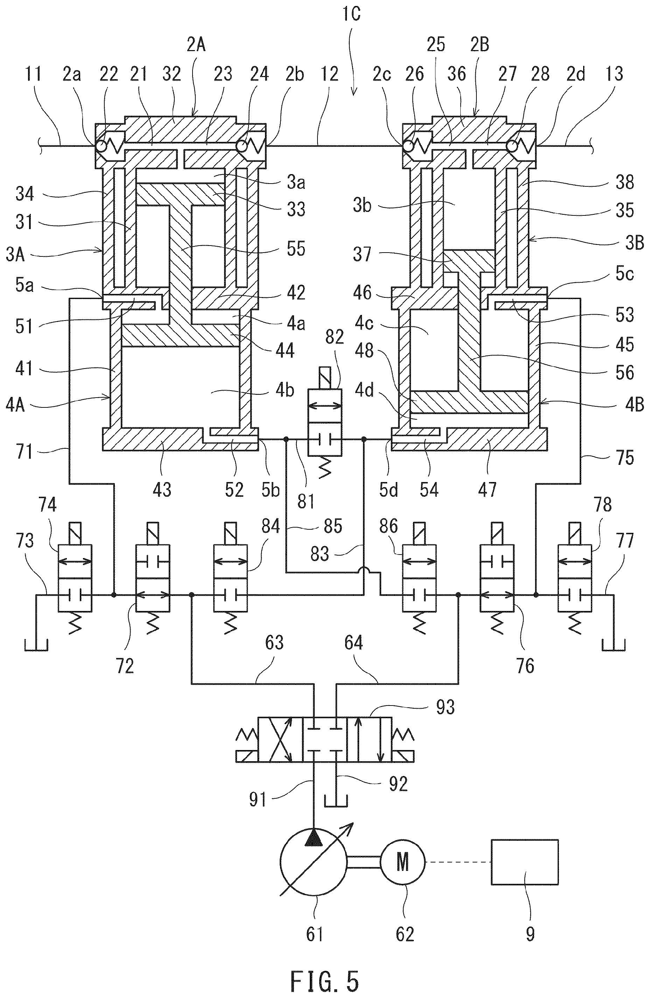

FIG. 5 shows a gas compressor 1C according to Embodiment 2. In the present embodiment, the same components as those described in Embodiment 1 are denoted by the same reference signs as those used in Embodiment 1, and repeating the same descriptions is avoided.

In the present embodiment, the hydraulic pump 61 rotates only in one direction. Accordingly, the hydraulic pump 61 is connected to the first shared passage 63 and the second shared passage 64 via a pump passage 91 and a switching valve 93. The hydraulic pump 61 may be a variable displacement pump, or may be a fixed displacement pump.

The hydraulic pump 61 supplies the hydraulic oil to either the first shared passage 63 or the second shared passage 64 via the pump passage 91 and the switching valve 93. The switching valve 93 is connected to the tank a tank passage 92. In the present embodiment, the switching valve 93 is a three-position valve that is switched between a neutral position, a first acting position, and a second acting position.

When the switching valve 93 is in the neutral position, the switching valve 93 blocks all of the pump passage 91, the tank passage 92, the first shared passage 63, and the second shared passage 64. When the switching valve 93 is in the first acting position, which is the right-side position in FIG. 5, the switching valve 93 allows the pump passage 91 to communicate with the first shared passage 63, and allows the second shared passage 64 to communicate with the tank passage 92. When the switching valve 93 is in the second acting position, which is the left-side position in FIG. 5, the switching valve 93 allows the pump passage 91 to communicate with the second shared passage 64, and allows the first shared passage 63 to communicate with the tank passage 92. The opening degree of the switching valve 93 in each of the first acting position and the second acting position may be constant or variable.

Other than the above features, the configuration of the gas compressor 1C is the same as the configuration described in Embodiment 1. That is, the supply/discharge port 5b of the first gas booster 2A and the supply/discharge port 5d of the second gas booster 2B are connected to each other by the hydraulic communication passage 81, and the first on-off valve 82 is located on the hydraulic communication passage 81. The gas compressor 1C also includes the second on-off valve 72, the third on-off valve 76, the fourth on-off valve 84, and the fifth on-off valve 86. Therefore, the present embodiment provides the same advantageous effects as those provided by Embodiment 1.

### <Variations>

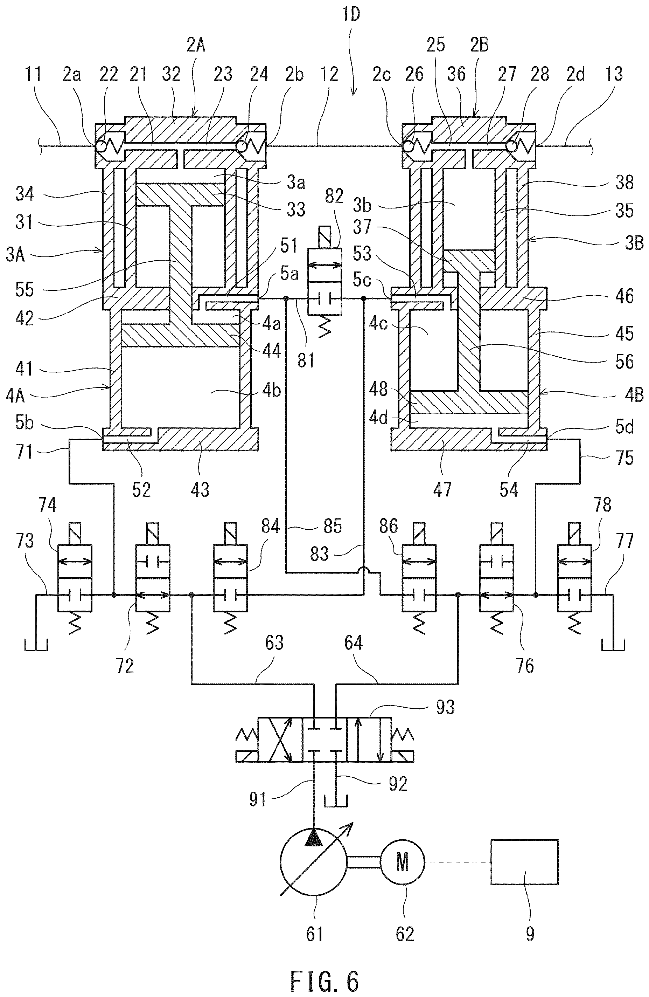

As in a gas compressor 1D, which is a variation shown in FIG. 6, the supply/discharge port 5a of the first gas booster 2A and the supply/discharge port 5c of the second gas booster 2B may be connected to each other by the hydraulic communication passage 81.

### <Other Embodiments>

The present disclosure is not limited to the above-described embodiments. Various modifications can be made without departing from the scope of the present disclosure.

For example, the axial direction of each of the gas cylinder 3A, the gas cylinder 3B, the hydraulic cylinder 4A, and the hydraulic cylinder 4B need not be the upward-downward direction, but may be a lateral direction. However, in a case where the axial direction of each of the gas cylinder 3A, the gas cylinder 3B, the hydraulic cylinder 4A, and the hydraulic cylinder 4B is the upward-downward direction as in the above-described embodiments, the installation area of each of the gas compressors 1A, 1B, 1C, and 1D can be reduced compared to a case where the axial direction of each of the gas cylinder 3A, the gas cylinder 3B, the hydraulic cylinder 4A, and the hydraulic cylinder 4B is the lateral direction. Since the space above the gas cylinders 3A and 3B can be utilized as a maintenance space, a gap between the first gas booster 2A including the gas cylinder 3A and the hydraulic cylinder 4A and the surrounding structure, and a gap between the second gas booster 2B including the gas cylinder 3B and the hydraulic cylinder 4B and the surrounding structure, can be reduced. Further, since the gas cylinders 3A and 3B are positioned above the hydraulic cylinders 4A and 4B, the first gas piston 33 and the second gas piston 37 can be suspended from above, which makes it possible to increase the maintainability.

It is also possible to compress the gas in one stage by using the first gas booster 2A without using the second gas booster 2B. In the case of compressing the gas by using the first gas booster 2A without using the second gas booster 2B, the control circuitry 9 drives the hydraulic pump 61 in a state where the second on-off valve 72 and the fifth on-off valve 86 are opened and the first on-off valve 82, the third on-off valve 76, and the fourth on-off valve 84 are closed.

Alternatively, a low-pressure supply passage may be branched off from the gas communication passage 12; the number of first gas boosters 2A may be two; and their two first compression chambers 3a may be connected in parallel to one second compression chamber 3b by the gas communication passage 12. In this case, when the gas with a low pressure and a high flow rate is required, the gas may be compressed in one stage by using the two first gas boosters 2A, whereas when the gas with a high pressure and a low flow rate is required, the gas may be compressed in two stages by using one of the first gas boosters 2A and the second gas booster 2B.

### <Summary>

The present disclosure provides, as a first mode, a gas compressor including: a first gas booster including a first gas piston and a first hydraulic piston, the first gas piston facing a first compression chamber, the first hydraulic piston partitioning off a first driving chamber and a second driving chamber from each other and being coupled to the first gas piston by a rod that extends across the first driving chamber; a second gas booster including a second gas piston and a second hydraulic piston, the second gas piston facing a second compression chamber that is supplied with gas from the first compression chamber, the second hydraulic piston partitioning off a third driving chamber and a fourth driving chamber from each other and being coupled to the second gas piston by a rod that extends across the third driving chamber; and an on-off valve located on a communication passage through which the first driving chamber and the third driving chamber, or the second driving chamber and the fourth driving chamber, communicate with each other.

According to the above configuration, since the on-off valve is located on the communication passage, if the on-off valve is closed, one of the first hydraulic piston or the second hydraulic piston can be stopped, and the other can be moved. This makes it possible to switch between compressing the gas in one stage and compressing the gas in two stages.

As a second mode, in the first mode, the on-off valve may be a first on-off valve, the second driving chamber and the fourth driving chamber may communicate with each other through the communication passage, and the gas compressor may further include: a hydraulic pump that delivers hydraulic oil to either a first shared passage or a second shared passage; a second on-off valve located on a first supply/discharge passage between the first driving chamber and the first shared passage; a third on-off valve located on a second supply/discharge passage between the third driving chamber and the second shared passage; a fourth on-off valve located on a first branch passage that is branched off from the communication passage at a position closer to the fourth driving chamber than the first on-off valve is and that connects to the first shared passage; and a fifth on-off valve located on a second branch passage that is branched off from the communication passage at a position closer to the second driving chamber than the first on-off valve is and that connects to the second shared passage. According to this configuration, two-stage gas compression using both the first gas booster and the second gas booster is enabled by opening the first on-off valve, the second on-off valve, and the third on-off valve and closing the fourth on-off valve and the fifth on-off valve. Also, one-stage gas compression using the second gas booster without using the first gas booster is enabled by opening the third on-off valve and the fourth on-off valve and closing the first on-off valve, the second on-off valve, and the fifth on-off valve. Further, one-stage gas compression using the first gas booster without using the second gas booster is enabled by opening the second on-off valve and the fifth on-off valve and closing the first on-off valve, the third on-off valve, and the fourth on-off valve.

As a third mode, in the second mode, for example, the gas compressor may further include control circuitry that controls the first on-off valve, the second on-off valve, the third on-off valve, the fourth on-off valve, and the fifth on-off valve. In a case of compressing the gas by using both the first gas booster and the second gas booster, the control circuitry may open the first on-off valve, the second on-off valve, and the third on-off valve, and close the fourth on-off valve and the fifth on-off valve, and in a case of compressing the gas by using the second gas booster without using the first gas booster, the control circuitry may open the third on-off valve and the fourth on-off valve, and close the first on-off valve, the second on-off valve, and the fifth on-off valve.

As a fourth mode, in the third mode, the control circuitry may control the hydraulic pump, and before compressing the gas by using both the first gas booster and the second gas booster, in a state where the third on-off valve and the fourth on-off valve are opened, and the first on-off valve, the second on-off valve, and the fifth on-off valve are closed, the control circuitry may drive the hydraulic pump to supply the hydraulic oil to the fourth driving chamber to move the second hydraulic piston in a direction toward the second gas piston. According to this configuration, before using both the first gas booster and the second gas booster, the hydraulic oil can be charged into a middle chamber that is formed by the second driving chamber, the communication passage, and the fourth driving chamber.

As a fifth mode, in the third mode, the control circuitry may control the hydraulic pump, and before compressing the gas by using both the first gas booster and the second gas booster, in a state where the second on-off valve and the fifth on-off valve are opened and the first on-off valve, the third on-off valve, and the fourth on-off valve are closed, the control circuitry may drive the hydraulic pump to supply the hydraulic oil to the second driving chamber to move the first hydraulic piston in a direction toward the first gas piston. According to this configuration, before using both the first gas booster and the second gas booster, the hydraulic oil can be charged into the middle chamber that is formed by the second driving chamber, the communication passage, and the fourth driving chamber.

As a sixth mode, in the first mode, the on-off valve may be a first on-off valve, the first driving chamber and the third driving chamber may communicate with each other through the communication passage, and the gas compressor may further include: a hydraulic pump that delivers hydraulic oil to either a first shared passage or a second shared passage; a second on-off valve located on a first supply/discharge passage between the second driving chamber and the first shared passage; a third on-off valve located on a second supply/discharge passage between the fourth driving chamber and the second shared passage; a fourth on-off valve located on a first branch passage that is branched off from the communication passage at a position closer to the third driving chamber than the first on-off valve is and that connects to the first shared passage; and a fifth on-off valve located on a second branch passage that is branched off from the communication passage at a position closer to the first driving chamber than the first on-off valve is and that connects to the second shared passage. According to this configuration, two-stage gas compression using both the first gas booster and the second gas booster is enabled by opening the first on-off valve, the second on-off valve, and the third on-off valve and closing the fourth on-off valve and the fifth on-off valve. Also, one-stage gas compression using the second gas booster without using the first gas booster is enabled by opening the third on-off valve and the fourth on-off valve and closing the first on-off valve, the second on-off valve, and the fifth on-off valve. Further, one-stage gas compression using the first gas booster without using the second gas booster is enabled by opening the second on-off valve and the fifth on-off valve and closing the first on-off valve, the third on-off valve, and the fourth on-off valve.

As a seventh mode, in the sixth mode, for example, the gas compressor may further include control circuitry that controls the first on-off valve, the second on-off valve, the third on-off valve, the fourth on-off valve, and the fifth on-off valve. In a case of compressing the gas by using both the first gas booster and the second gas booster, the control circuitry may open the first on-off valve, the second on-off valve, and the third on-off valve, and close the fourth on-off valve and the fifth on-off valve, and in a case of compressing the gas by using the second gas booster without using the first gas booster, the control circuitry may open the third on-off valve and the fourth on-off valve, and close the first on-off valve, the second on-off valve, and the fifth on-off valve.

The present disclosure provides, as an eighth mode, a method of operating a gas compressor including a first gas booster and a second gas booster, the method including switching between a two-stage compression operation mode of compressing gas in two stages by using both the first gas booster and the second gas booster and a one-stage compression operation mode of compressing the gas in one stage by using the second gas booster without using the first gas booster.

### Reference Signs List

- 1A, 1B, 1C, 1D: gas compressor
- 12: gas communication passage
- 2A: first gas booster
- 2B: second gas booster
- 33: first gas piston
- 37: second gas piston
- 3a: first compression chamber
- 3b: second compression chamber
- 44: first hydraulic piston
- 48: second hydraulic piston
- 4a: first driving chamber
- 4b: second driving chamber
- 4c: third driving chamber
- 4d: fourth driving chamber
- 55, 56: rod
- 61: hydraulic pump
- 63: first shared passage
- 64: second shared passage
- 71: first supply/discharge passage
- 72: second on-off valve
- 75: second supply/discharge passage
- 76: third on-off valve
- 81: hydraulic communication passage
- 82: first on-off valve
- 83: first branch passage
- 84: fourth on-off valve
- 85: second branch passage
- 86: fifth on-off valve
- 9: control circuitry

## Claims

1. A gas compressor comprising:
a first gas booster including a first gas piston and a first hydraulic piston, the first gas piston facing a first compression chamber, the first hydraulic piston partitioning off a first driving chamber and a second driving chamber from each other and being coupled to the first gas piston by a rod that extends across the first driving chamber;
a second gas booster including a second gas piston and a second hydraulic piston, the second gas piston facing a second compression chamber that is supplied with gas from the first compression chamber, the second hydraulic piston partitioning off a third driving chamber and a fourth driving chamber from each other and being coupled to the second gas piston by a rod that extends across the third driving chamber; and
an on-off valve located on a communication passage through which the first driving chamber and the third driving chamber, or the second driving chamber and the fourth driving chamber, communicate with each other.

2. The gas compressor according to claim 1, wherein
the on-off valve is a first on-off valve,
the second driving chamber and the fourth driving chamber communicate with each other through the communication passage, and
the gas compressor further comprises:
a hydraulic pump that delivers hydraulic oil to either a first shared passage or a second shared passage;
a second on-off valve located on a first supply/discharge passage between the first driving chamber and the first shared passage;
a third on-off valve located on a second supply/discharge passage between the third driving chamber and the second shared passage;
a fourth on-off valve located on a first branch passage that is branched off from the communication passage at a position closer to the fourth driving chamber than the first on-off valve is and that connects to the first shared passage; and
a fifth on-off valve located on a second branch passage that is branched off from the communication passage at a position closer to the second driving chamber than the first on-off valve is and that connects to the second shared passage.

3. The gas compressor according to claim 2, further comprising control circuitry that controls the first on-off valve, the second on-off valve, the third on-off valve, the fourth on-off valve, and the fifth on-off valve, wherein
in a case of compressing the gas by using both the first gas booster and the second gas booster, the control circuitry opens the first on-off valve, the second on-off valve, and the third on-off valve, and closes the fourth on-off valve and the fifth on-off valve, and in a case of compressing the gas by using the second gas booster without using the first gas booster, the control circuitry opens the third on-off valve and the fourth on-off valve, and closes the first on-off valve, the second on-off valve, and the fifth on-off valve.

4. The gas compressor according to claim 3, wherein
the control circuitry controls the hydraulic pump, and
before compressing the gas by using both the first gas booster and the second gas booster, in a state where the third on-off valve and the fourth on-off valve are opened, and the first on-off valve, the second on-off valve, and the fifth on-off valve are closed, the control circuitry drives the hydraulic pump to supply the hydraulic oil to the fourth driving chamber to move the second hydraulic piston in a direction toward the second gas piston.

5. The gas compressor according to claim 3, wherein
the control circuitry controls the hydraulic pump, and
before compressing the gas by using both the first gas booster and the second gas booster, in a state where the second on-off valve and the fifth on-off valve are opened and the first on-off valve, the third on-off valve, and the fourth on-off valve are closed, the control circuitry drives the hydraulic pump to supply the hydraulic oil to the second driving chamber to move the first hydraulic piston in a direction toward the first gas piston.

6. The gas compressor according to claim 1, wherein
the on-off valve is a first on-off valve,
the first driving chamber and the third driving chamber communicate with each other through the communication passage, and
the gas compressor further comprises:
a hydraulic pump that delivers hydraulic oil to either a first shared passage or a second shared passage;
a second on-off valve located on a first supply/discharge passage between the second driving chamber and the first shared passage;
a third on-off valve located on a second supply/discharge passage between the fourth driving chamber and the second shared passage;
a fourth on-off valve located on a first branch passage that is branched off from the communication passage at a position closer to the third driving chamber than the first on-off valve is and that connects to the first shared passage; and
a fifth on-off valve located on a second branch passage that is branched off from the communication passage at a position closer to the first driving chamber than the first on-off valve is and that connects to the second shared passage.

7. The gas compressor according to claim 6, further comprising control circuitry that controls the first on-off valve, the second on-off valve, the third on-off valve, the fourth on-off valve, and the fifth on-off valve, wherein
in a case of compressing the gas by using both the first gas booster and the second gas booster, the control circuitry opens the first on-off valve, the second on-off valve, and the third on-off valve, and closes the fourth on-off valve and the fifth on-off valve, and in a case of compressing the gas by using the second gas booster without using the first gas booster, the control circuitry opens the third on-off valve and the fourth on-off valve, and closes the first on-off valve, the second on-off valve, and the fifth on-off valve.

8. A method of operating a gas compressor including a first gas booster and a second gas booster, the method comprising switching between a two-stage compression operation mode of compressing gas in two stages by using both the first gas booster and the second gas booster and a one-stage compression operation mode of compressing the gas in one stage by using the second gas booster without using the first gas booster.
